# EUROPEAN PATENT APPLICATION

(11) **EP 4 389 703 A1**
(43) Date of publication of application: **26.06.2024**
(21) Application number: 22214631.8
(22) Date of filing: 19.12.2022
(51) Int. Cl.: C01B 32/40, B01J 12/00, B01J 23/745, C01B 3/04, C01B 21/02

(54) **CHEMICAL LOOPING PROCESS FOR THE PRODUCTION OF CO FROM CO2**

(71) Applicant: Nederlandse Organisatie voor toegepast-natuurwetenschappelijk Onderzoek TNO, 2595 DA 's-Gravenhage (NL)
(72) Inventor: The designation of the inventor has not yet been filed
(74) Representative: Nederlandsch Octrooibureau

(57) **Abstract**

The invention concerns a chemical looping process for the production of CO from CO₂, wherein NH₃ and CO₂ are iteratively provided to a reactor. The invention furthermore concerns the use of NH₃ in a chemical looping process for the production of CO from CO₂ and a chemical looping reactor.

## Description

### Introduction

In the near future synthetic hydrocarbon fuels will be required to decarbonize hard-to-electrify industries. The most clear example is aviation fuel, which will be required to be blended with increasing amounts of sustainable hydrocarbons. To produce aviation fuels as well as other synthetic hydrocarbon fuels, CO₂ can be used as a feedstock. However, the yields and efficiencies of CO₂ as a feedstock are much lower than when using CO. Current technology developments to improve CO₂ based processes are at a low technological readiness level and it is not sure if they will eventually surpass the efficiency of converting CO₂ into CO before producing the synthetic hydrocarbons. Conversion of CO₂ to CO is conventionally done in a reverse water gas shift (RWGS) reactor, where hydrogen is used to produce water and CO from CO₂. A disadvantage of the reverse water gas shift process is the unwanted formation of methane as a side product.

An alternative process for the conversion of CO₂ to CO is chemical looping. Chemical looping is a two-step process in which in a first step a redox catalyst, typically a metal oxide is reduced to its lower oxidation states and/or its metallic form by feeding a reducing agent. Typical reducing agents for the conversion of CO₂ to CO are H₂ and methane. In a second step CO₂ is fed and reduced by the redox catalyst to CO. In this way CO with a high purity can be obtained. Wenzel et al. (Biochemical Pharmacology, 17, 60-68, 2017) describes such process.

H₂ is a promising reducing agent in this process. However, for the envisioned quantities of H₂ needed, local sustainable production of H₂ is a challenge. Locations in which CO₂ of high purity is available or locations with the capability of converting CO into base chemicals of fuels may not have access to large quantities of cost-efficient and sustainable produced H₂. For example it is expected that large amounts of sustainable H₂ will be produced close to the equator. Areas close to the equator have cheap sustainable electricity, due to the presence of abundant solar irradiation. In contrary processing facilities are often further from the equator. Transport and storage of H₂ therefore is inevitable, which is not straightforward. H₂ is known to be difficult to store and to transport, especially the low energy density of H₂ storage and the safety of H₂ storage is a concern.

Considering the above, there is a need of an efficient sustainable chemical looping process for the conversion of CO₂ to CO that makes use of a sustainable reducing agent that is easy to store and transport. Preferably the sustainable reducing agent can be readily employed, so directly used in the chemical looping process for the conversion of CO₂ to CO.

### Summary of the invention

The inventors now surprisingly realized that ammonia (NH₃) is a good reducing agent in a process for the conversion of CO₂ to CO. NH₃ can be produced in a sustainable way and is straightforward to transport. For example the energy density of stored (liquid) NH₃ is much higher than stored H₂. Also the pressure for storage is much lower for NH₃ compared to H₂ and transport ships are known for integrating NH₃ as an energy source for their own propulsion.

The direct use of NH₃ in a process for the conversion of CO₂ to CO is especially beneficial since less or no cracking of NH₃ is needed before feeding the NH₃ to the reactor. Cracking of NH₃ is the process in which NH₃ is converted to N₂ and H₂. Cracking of NH₃ is an endothermic equilibrium reaction, and therefore requires undesirable recycle loops and separation of remnant NH₃ from the product stream. In contrary, for the current invention in which the NH₃ is directly fed, the H₂ is not an end product but an intermediate product that reacts further to form H₂O. The conversion of H₂ and O from the redox catalyst to H₂O is a non-equilibrium reaction and therefore the whole reaction (NH₃ and O from the redox catalyst to H₂O and N₂) will be a non-equilibrium reaction. This surprisingly improves the reaction efficiency, which results that a smaller reactor volume, no or less recycle and no or less separation of remnant NH₃ is needed. In addition, in case cracked NH₃ would be the reducing agent, an additional cracking reactor would be needed, whilst for the process of the invention one reactor is needed, which is beneficial from a cost point of view and which is beneficial because less space is needed. The use of one reactor furthermore facilitates process integration leading to less capital and operational costs.

Although CO may also produced in a water gas shift process (CO2 + H2 ⇔ CO and H2O) in such a process undesirable methane is formed as by-product, which now beneficially is not the case due to the nature of the chemical looping process.

### Brief description of the drawings

The present invention will be discussed in more detail below, with reference to the attached drawings.

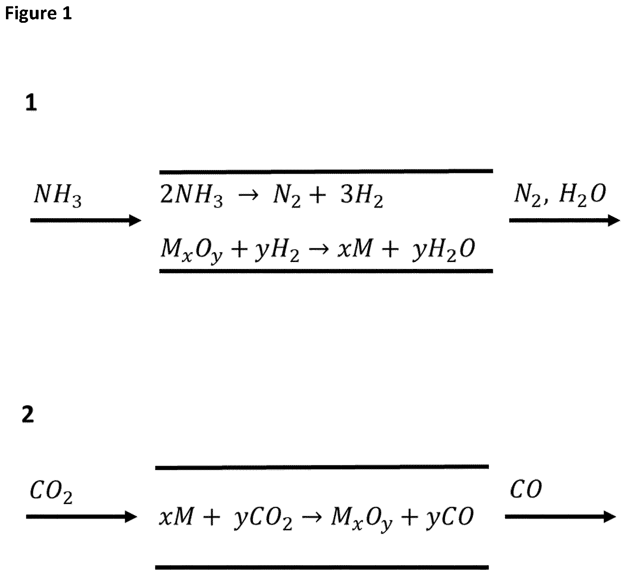

Figure 1 depicts a chemical looping reactor in two different modes, mode 1 and mode 2. Mode 1 corresponds to step 1, mode 2 corresponds to step 2. In step 1 NH₃ is fed and N₂ and H₂O exit the reactor. The reaction equation for the two reactions that occur during step 1 are depicted inside the reactor: conversion to NH₃ to N₂ and H₂ and the reduction of the redox catalyst MₓO_{y} by H₂ to M and H₂O. Although in this figure the redox catalyst is fully reduced in step 1, there are redox catalysts possible that are not fully reduced but only reduced to a less oxidized state. In step 2 CO₂ is fed and CO exits the reactor. The reaction equation for the reaction that occurs during step 2 is depicted inside the reactor: the redox reaction in which CO₂ is reduced to CO and the redox catalyst is oxidized from M to MₓO_{y}.

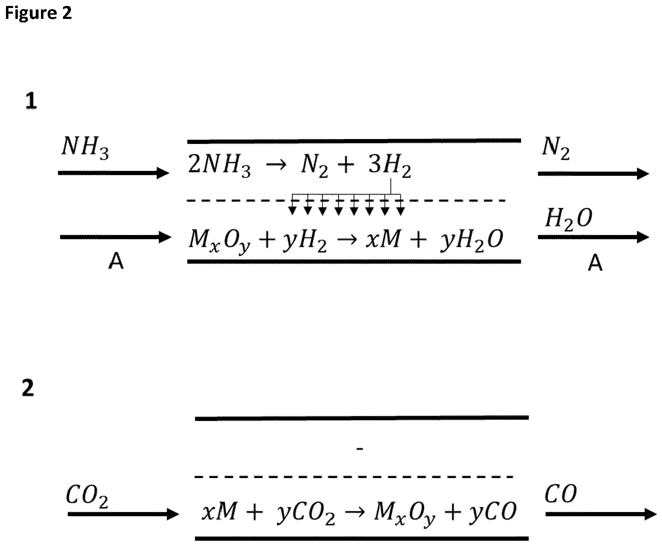

Figure 2 depicts a chemical looping reactor in two different modes, mode 1 and mode 2. Mode 1 corresponds to step 1, mode 2 corresponds to step 2. The reactor is a membrane reactor in which the dotted line is a H₂ permeable membrane. The part above the membrane is part 1 of the reactor, the part below the membrane is part 2 of the reactor. In step 1 NH₃ is fed and N₂ exits part 1 of the reactor. At the same time a sweeping gas A is fed to part 2 of the reactor. This sweeping gas transports the H₂O that is formed in part 2 of the reactor to the exit of part 2 of the reactor. The reaction equation for the two reactions that occur during step 1 are depicted inside the reactor: conversion to NH₃ to N₂ and H₂ in part 1 of the reactor and the reduction of the redox catalyst MₓO_{y} by H₂ to M and H₂O in part 2 of the reactor. H₂ is transported across the membrane from part 1 to part 2. Although in this figure the redox catalyst is fully reduced in step 1, there are redox catalysts possible that are not fully reduced but only reduced to a less oxidized state. In step 2 CO₂ is fed to part 2 of the reactor and CO exits part 2 of the the reactor. The reaction equation for the reaction that occurs during step 2 is depicted inside the reactor: the redox reaction in which CO₂ is reduced to CO and the redox catalyst is oxidized from M to MₓO_{y}. In part 1 no reaction takes place.

### Detailed Description

In a first embodiment of the invention the invention concerns the use of NH₃ in a chemical looping process for the production of CO from CO₂ by reduction of CO₂ to CO by a redox catalyst, wherein NH₃ is the reducing agent that reduces the redox catalyst.

The invention furthermore concerns a process for the production of CO from CO₂, wherein NH₃ and CO₂ are iteratively provided to a reactor comprising one or more catalysts and wherein CO is formed in the reactor when CO₂ is provided, and wherein the reaction temperature is 400°C or higher.

Furthermore the invention concerns a chemical looping reactor for the production of CO from CO₂ comprising a membrane that is permeable for H₂ that separates the reactor into two parts, wherein the first part comprises a catalyst for converting NH₃ to N₂ and H₂ and the second part comprises a redox catalyst for converting CO₂ to CO and wherein the reactor comprises one or more feed inlets and one or more product outlets connected to the first part and one or more feed inlets and one or more product outlets connected to the second part.

The embodiments disclosed in this document apply to all aspects of the invention, i.e. to the use of NH₃ in a chemical looping process for the production of CO from CO₂, to the process for the production of CO from CO₂ and to the chemical looping reactor for the production of CO from CO₂.

### Production of CO from CO₂

Chemical looping processes are known, also for producing CO from CO₂. In such chemical looping process the reactor comprises a redox catalyst and feed is alternated between an reducing agent and an oxidizing agent. The reducing agent reduces the redox catalysts and the oxidizing agent oxidizes the redox catalyst; or put differently, the redox catalyst oxidizes the reducing agent and the redox catalysts reduces the oxidizing agent. For the current invention CO₂ is the oxidizing agent and NH₃ is the reducing agent. NH₃ reduces the redox catalyst in a two-step reaction mechanism in which first NH₃ is cracked into N₂ and H₂ and subsequently the H₂ reacts with the redox catalyst into H₂O. The moment of switching of the feed is dictated by the composition of the product stream that exits the reactor. Preferably the feed is switched before the feed is no longer fully converted, in this way it is prevented that at least a part of the feed exits the reactor, so forms part of the product stream. Preferably the feed is switched before the product comprises more than 10 wt.% of the feed based on the total weight of the product stream, more preferably more than 1 wt.%, most preferably more than 0.1 wt.%.

The invention comprises a process for the production of CO from CO₂, wherein NH₃ and CO₂ are iteratively provided to a reactor comprising one or more catalysts and wherein CO is formed in the reactor when CO₂ is provided, and wherein the reaction temperature is 400°C or higher.

Preferably in a first step a feed comprising NH₃ is provided to the reactor, and in a second step a feed comprising CO₂ is provided to the reactor. The invention therefore may also be phrased as a process for the production of CO from CO₂, wherein NH₃ and CO₂ are iteratively provided to a reactor comprising one or more catalysts and wherein CO is formed in the reactor when CO₂ is provided, and wherein the reaction temperature is 400°C or higher and wherein in a first step a feed comprising NH₃ is provided to the reactor, and in a second step a feed comprising CO₂ is provided to the reactor.

Typically the first step and the second step are iterative, so after the second step the first step is repeated, followed by the second step and so on. The feed of the first step is also named the first feed and this first feed comprises NH₃, preferably the first feed comprises more than 50 wt.% NH₃ based on the total weight of the first feed, more preferably more than 70 wt.%, even more preferably more than 90 wt.%, most preferably more than 99 wt.%. The feed of the second step is also named the second feed and this second feed comprises CO₂, preferably the second feed comprises more than 50 wt.% CO₂ based on the total weight of the second feed, more preferably more than 70 wt.%, even more preferably more than 90 wt.%, most preferably more than 99 wt.%. Preferably the first feed comprises in the range of 50 wt.% - 100 wt.% NH₃ based on the total weight of the first feed, more preferably in the range of 70 wt.% - 100 wt.%, even more preferably in the range of 90 wt.% - 100 wt.%, most preferably in the range of 99 wt.% - 100 wt.%. The feed of the second step is also named the second feed and this second feed comprises CO₂, preferably the second feed comprises in the range of 50 wt.% -100 wt.% CO₂ based on the total weight of the second feed, more preferably in the range of 70 wt.% -100 wt.%, even more preferably in the range of 90 wt.% -100 wt.%, most preferably in the range of 99 wt.% - 100 wt.%.

In a preferred embodiment the reactor is purged after the first step. Purging prevents that any remnant NH₃ interferes with the oxidation of the redox catalyst during step two. Moreover without a purge the product of step two may comprise NH₃, N₂ or H₂ which may be not desirable. The optional purge gas after the first step is named the first purge gas. Preferably after a step of providing NH₃ and before a step of providing CO₂ the reactor is purged with a first purge gas. Preferably the first purge gas is a gas that is inert so does not oxidise or reduce the redox catalyst, more preferably the first purge gas comprises one or more of N₂, H₂O, He and Ar, even more preferably one or more of N₂, He and Ar.

In a preferred embodiment the reactor is purged after the second step. Preferably after a step of providing CO₂ and before a step of providing NH₃ the reactor is purged with a second purge gas. Purging prevents that any remnant CO₂ interferes with the reduction of the redox catalyst during step one. Moreover without a purge the product of step one may comprise CO₂ or CO which may be not desirable. The optional purge gas after the second step is named the second purge gas. Preferably after a step of providing CO₂ and before a step of providing NH₃ the reactor is purged with a second purge gas. Preferably the second purge gas is a gas that is inert, so does not oxidise or reduce the redox catalyst, more preferably the second purge gas comprises one or more of N₂, H₂O, He and Ar, even more preferably one or more of N₂, He and Ar.

Typically the flow in the reaction has a plug flow character. The result is that the concentration of components is not uniform throughout the reactor. As the conversion of NH₃ to N₂ and H₂ only starts when entering the reaction, it may be that in the part of the reactor that is close to the feed the reduction of the redox catalyst occurs at an undesirably low rate due to that insufficient H₂ has formed.

Next to this under certain reaction circumstances metal catalyst may form undesirable metal nitrides which may affect the overall reaction efficiency. Metal nitride formation may be prevented by providing some additional H₂ to the NH₃ comprising feed. The addition of H₂ lowers the N₂ partial pressure, moreover H₂ may react with the nitride to form NH₃.

Therefore, for improve reactor efficiency and/or for preventing nitride formation, in a preferred embodiment the first feed comprises H₂, more preferably the first feed comprises in the range of 1- 40 wt.% H₂ based on the total weight of the first feed, even more preferably in the range of 2 - 20 wt.%, most preferably in the range of 4 - 15 wt.%.

H₂ may be formed by continuing feeding NH₃ in step one after the redox catalyst is fully reduced. At that moment H₂ is not further converted to H₂O and H₂ is present in the product. This H₂ may be stored and mixed with the first feed. Alternatively H₂ may be produced by partial pre-cracking of NH₃. For the current embodiment preferably in the first step NH₃ is provided also after the redox catalyst is fully reduced and this H₂ is provided to the first feed, preferably provided to the first feed in a next iteration of the first step, or NH₃ is partially cracked before feeding the NH₃ to the reactor as first feed.

In a preferred embodiment for the current invention the reaction temperature is in the range of 400 °C - 1200 °C, preferably in the range of 600 °C - 1000 °C, more preferably in the range of 650 °C-850 °C, even more preferably in the range of 750 °C-850 °C. A higher reaction temperature speeds up the reaction and therewith reaction efficiency, whilst a too high temperature requires too much CAPEX and OPEX. Zeng et al. (Nature Reviews Chemistry volume 2, pages 349-364, 2018) explain that the conversion of CO₂ to CO in a chemical looping process is optimal at 650°C - 850°C from a thermodynamic perspective. Wenzel et al. (Biochemical Pharmacology, 17, 60-68, 2017) point that for Fe₂O₃ as redox catalyst the optimal temperature range is between 750°C and 850°C. In a preferred embodiment the redox catalyst is Fe₂O₃ and the reaction temperature is in the range of 750°C - 850°C.

Preferably, the reaction pressure is in the range of 1-100 bar, preferably 2-50 bar, even more preferably 4-20 bar, most preferably 5-10 bar. A higher pressure may provide for a higher yield. In addition a higher pressure is beneficial fort he downstream processing of the CO that is formed. Am lower pressure may provide for a lower conversion rate.

In a preferred embodiment the reactor is electrically heated. Electrical heating is advantageous as the electricity can be derived from a sustainable source. Preferably part of the electricity for the heating is generated by a steam turbine that is at least partially powered by steam that is produced in the reactor. As the reaction temperature is far above 100°C, the H₂O that is produced in the reactor is gaseous, so is steam. Preferably NH₃ is used as an energy source for the heating. For this embodiment the NH₃ is cracked and the resulting H₂ is oxidized to generate energy for the heating.

In a preferred embodiment the one or more catalysts comprise a redox catalyst for converting CO₂ to CO and a catalyst for converting NH₃ to N₂ and H₂, more preferably the one or more catalysts consist of a redox catalyst for converting CO₂ to CO and a catalyst for converting NH₃ to N₂ and H₂. Preferably the one or more catalysts comprise a redox catalyst for converting CO₂ to CO and a catalyst for converting NH₃ to N₂ and H₂ and the catalyst for converting CO₂ to CO is the same catalyst as the catalyst for converting NH₃ to N₂ and H₂, more preferably this the same catalyst is an iron oxide, even more preferably Fe₂O₃, Fe₃O₄ or a combination thereof.

### Redox catalyst for the conversion of CO₂ to CO and of H₂ to H₂O

For the conversion of CO₂ to CO and of H₂ to H₂O a redox catalyst is used that both catalyses the oxidation of H₂ and the reduction of CO₂ and at the same time participates in this reaction by taking up oxygen of CO₂ and providing this oxygen to H₂. Therefore this redox catalyst has two functionalities; as redox catalyst and as oxygen carrier. In the context of chemical looping processes for converting CO₂ to CO the redox catalyst therefore also is named an oxygen carrier material. In the current document for this redox catalyst both the terms 'redox catalyst for converting CO₂ to CO' and 'oxygen carrier material for converting CO₂ to CO' are used. Evidently this redox catalyst for converting CO₂ to CO also is a redox catalyst for converting H₂ to H₂O and also is an oxygen carrier material for converting H₂ to H₂O. The redox catalyst for converting CO₂ to CO can be in an oxidized state or in a reduced state. The reduced state does not necessarily mean that the redox catalyst is fully reduced, i.e. in the reduced state the reduced redox catalyst may still be an oxide. When in the current document species of the redox catalyst for converting CO₂ to CO are mentioned, these species will be referred to in their oxidized form as metal oxide.

Zeng et al. (Nature Reviews Chemistry volume 2, pages 349-364 (2018)) provides a review on redox catalysts for chemical looping processes. Typical redox catalysts are metal oxides, wherein good results have been obtained with iron oxide and copper oxide. Zeng et al. describes that adding a promotor and a support are common practice for these redox catalysts. Wenzel et al. (Journal of CO2 Utilization, Volume 17, January 2017, Pages 60-68) describe chemical looping of CO₂ and H₂ into CO and H₂O in which promoted iron oxide is studied as a redox catalyst. Also Galvita et al. (Ind. Eng. Chem. Res. 2013, 52, 25, 8416-8426) studied iron oxide and promoted iron oxide redox catalysts for chemical looping of CO₂ and H₂ into CO and H₂O.

In a preferred embodiment the redox catalyst for converting CO₂ to CO is a metal oxide wherein preferably the metal is a transition metal, more preferably the metal is selected from the list consisting of Cu, Fe, Mo and W, most preferably Fe. Even more preferably the redox catalyst for converting CO₂ to CO is Fe₂O₃, Fe₃O₄ or a mixture thereof. Fe₂O₃ is known to provide for good results in the chemical looping of CO₂ and H₂ to CO and H₂O. In this process Fe₂O₃ is reduced to Fe. Also good results have been presented for Fe₃O₄ wherein Fe₃O₄ is reduced to FeO. By using Fe₃O₄ nitrification of metallic Fe in the presence of NH₃ may be advantageously prevented. Nitrification of metallic Fe is the formation of FeₓN_{y}. Nitrification of Fe may lower the catalytic activity.

In a preferred embodiment the redox catalyst for converting CO₂ to CO is promoted by a metal promotor, preferably wherein the promotor is selected from the list consisting of alkali metals, rare earth metals and their oxides, more preferably wherein the promotor is selected from the list consisting of K, Na, Ba, Cs, Li, La, Ce, Al, Ca, Ti and their oxides, even more preferably the promotor is Ce or its oxide. Preferably the amount of promotor is in the range of 0.01 - 20 wt.% based on the total weight of the catalyst without support, more preferably in the range of 0.1 - 10 wt.% based on the total weight of the catalyst without support. A promoter is a substance which increases the catalytic effect of a catalyst.

In a preferred embodiment the redox catalyst for converting CO₂ to CO is applied on a support. A support may stabilize the size and/or morphology of the metal particles and increase the exposure of their active sites. The support may also affect catalyst performance. By providing a support the heat stability is enhanced, therewith preventing sintering. Preferably the support material is a metal oxide or a carbon based support, more preferably the support material is selected from the list consisting of Al₂O₃, SiO₂, CeO₂, MgO, La₂O₃, TiO₂, Y₂O₃, ZrO₂, CeZrO₂, SBA-15, ZSM-5, carbon nanotubes, C and Graphite, most preferably the support material is SiO₂.

### Catalyst for converting NH₃ to N₂ and H₂

Catalyst for converting NH₃ to N₂ and H₂ are known in the art. Lucentini et al. (Ind. Eng. Chem. Res. 2021, 60, 18560-18611) provides an overview of such catalysts. For the selection of a catalyst for converting NH₃ to N₂ and H₂ the skilled person is aware of suitable materials and conditions to be used from this or other publications. Typically transition metals are used. Although the reaction is catalyzed by metal catalysts in their non-oxidized form, also oxidized metals can act as catalysts. For example, from the field of metallurgy (ironmaking) Hosokai et al. (Environ. Sci. Technol. 2011, 45, 821-826) disclose Fe₂O₃ and Fe₃O₄ to catalyze the thermal decomposition of NH₃ to H₂ and N₂, in which the formed H₂ in a subsequent step reduces the iron oxide to iron. Hosokai et al. report that this is the dominant NH₃ cracking pathway at temperatures above 530°C. Furthermore Hosokai et al. report that no iron nitrides appear at temperatures of 600°C and 700°C.

In a preferred embodiment the catalyst for converting NH₃ to N₂ and H₂ is a metal catalyst or its oxide, preferably a transition metal catalyst or its oxide, more preferably a metal catalyst or its oxide wherein the metal is selected from the list consisting of Ru, Ni, Rh, Co, Ir, Fe, Pt, Cr, Pd, Cu, Ag, Mo, Gd and combinations thereof, even more preferably the metal is selected from the list consisting of Ni, Ru and Fe.

In a particularly preferred embodiment the catalyst for converting NH₃ to N₂ and H₂ is iron oxide. Such catalyst also is a redox catalyst for for converting CO₂ to CO and for the current process by the use of iron oxide advantageously only one catalyst is needed. Obviously, for this embodiment the redox catalyst for for converting CO₂ to CO is also iron oxide.

Good results have been obtained by adding a promotor to the catalyst (Lucentini et al. (Ind. Eng. Chem. Res. 2021, 60, 18560-18611). A promoter is a substance which increases the catalytic effect of a catalyst. In a preferred embodiment the catalyst for converting NH₃ to N₂ and H₂ is promoted by a metal promotor, preferably wherein the promotor is selected from the list consisting of alkali metals, rare earth metals and their oxides, more preferably wherein the promotor is selected from the list consisting of K, Na, Ba, Cs, Li, La, Ce, Al, Ca, Ti and their oxides. Preferably the amount of promotor is in the range of 0.01 - 20 wt.% based on the total weight of the catalyst without support, more preferably in the range of 0.1 - 10 wt.% based on the total weight of the catalyst without support.

In a preferred embodiment the catalyst for converting NH₃ to N₂ and H₂ is applied on a support. A support may stabilize the size and/or morphology of the metal particles and increase the exposure of their active sites. The support may also affect catalyst performance. By providing a support the heat stability is enhanced, therewith preventing sintering. Preferably the support material is a metal oxide or a carbon based support, more preferably the support material is selected from the list consisting of Al₂O₃, SiO₂, CeO₂, MgO, La₂O₃, TiO₂, Y₂O₃, ZrO₂, CeZrO₂, SBA-15, ZSM-5, carbon nanotubes, C and Graphite, most preferably the support material is SiO₂. SiO₂ is easy to produce, has high stability and a low price.

### Membrane and membrane reactor

In a preferred embodiment the reactor is a membrane reactor comprising a H₂ permeable membrane. The H₂ permeable membrane separates the reactor into two parts. The first part is on the first side of the H₂ permeable membrane and the second part is on the second side of the H₂ permeable membrane. For this embodiment during the reduction of the redox catalyst H₂ is produced on one side of the H₂ permeable membrane by ammonia cracking and the H₂ permeates through the H₂ permeable membrane and reduces the redox catalyst on the other side of the H₂ permeable membrane to form H₂O. In this way N₂ does not come into contact with the redox catalyst which may be beneficial for the prevention of nitrification. Moreover the membrane reactor delivers concentrate N₂ which needs no further separation or concentration. Also there is more flexibility in the selection of NH₃ cracking catalyst and redox catalyst, since the catalysts are fully separated.

Preferably the membrane is selective for H₂. Selective for H₂ means that no relevant amounts of other components than H₂ permeate the membrane. Preferably more than 90 wt.% on the basis of the total weight of components that permeate the membrane is H₂, more preferably more than 99 wt.%.

For the embodiment that the reactor is a membrane reactor, during the reduction of the redox catalyst preferably a sweep gas is provided to the part of the reactor comprising the redox catalyst. In this way H₂O that is formed is carried away from this part of the reactor. The part of the reactor comprising the redox catalyst is named the second part. Preferably the sweeping gas is a gas that is inert, so does not oxidise or reduce the redox catalyst, more preferably the sweeping gas comprises one or more of N₂, H₂O, He and Ar, even more preferably one or more of N₂, He and Ar. In a preferred embodiment the sweeping gas is the same as the second purge gas.

Membranes that are permeable for H₂ are known in the art as for example described by Ockwig et al. (Chemical Reviews, 107(10), 4078-4110). Metallic, ceramic and carbon membranes are best suitable for the envisioned temperature range of the current process. Dong et al. (Journal of Membrane Science, volume 629, 1 July 2021, 119281) describe a zeolite membrane, a carbon molecular sieve membrane, and Pd/Ag membrane for removing H₂ during catalytic cracking of ammonia. Sitar et al. (Journal of Membrane Science, volume 644, 15 February 2022, 120147) describes a Pd membrane and a zeolite membrane for removing H₂ during catalytic cracking of ammonia.

In a preferred embodiment the H₂ permeable membrane is selected from the list of a metallic membrane, a ceramic membrane and a carbon membrane, preferably the H₂ permeable membrane is a ceramic membrane or a carbon membrane, more preferably a dense or porous ceramic membrane or a porous carbon membrane, even more preferably a dense ceramic membrane or a porous carbon membrane. Dense and porous membranes are known in the art. Preferably for this embodiment the metallic membrane is a Pd, Pd/Ag, Ta, V, Nb or alloy membrane, wherein the alloy comprises V, Cr, Ti, Ni, Al, Fe, Zr, Mo or Co. Preferably for this embodiment the ceramic membrane is a silica, alumina, zirconia, titania or zeolite membrane.

In a preferred embodiment the reactor in the context of the invention is a membrane reactor comprising a membrane that is permeable for H₂, wherein the H₂ permeable membrane separates the reactor into two parts and wherein in the first part a catalyst for converting NH₃ to N₂ and H₂ is present and wherein in the second part a redox catalyst for converting CO₂ to CO is present. To the first part of the membrane reactor NH₃ is provided and to the second part CO₂ is provided. Any suitable membrane reactor may be selected. Preferably the membrane reactor is a tubular membrane reactor or a plate-on-plate membrane reactor. Preferably the reactor is a chemical looping reactor. Preferably the reactor comprises one or more feed inlets and one or more product outlets connected to the first part and one or more feed inlets and one or more product outlets connected to the second part.

### General Definitions

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "about" or "approximately" when used in association with a numerical value (e.g. about 10) preferably means that the value may be the given value more or less 1% of the value.

The present invention has been described above with reference to a number of exemplary embodiments. Modifications and alternative implementations of some parts or elements are possible, and are included in the scope of protection as defined in the appended claims. All citations of literature and patent documents are hereby incorporated by reference.

The chemical elements that are included in this documents are written in chemical element symbols. The chemical compounds in this documents are written in chemical formula format using chemical element symbols. For the genus metal the symbol M is used. Some chemical formulas used in this document are: hydrogen = H₂, carbon monoxide = CO, carbon dioxide = CO₂, water = H₂O and ammonia = NH₃. In case the term metal oxide or a species is mentioned, the stoichiometric ratio between the metal and the oxide is open and can be any known ratio. For example iron oxide covers FeO, Fe₂O₃, Fe₃O₄ and other known iron oxides. For some metal oxides only one stoichiometric ratio is known, which limits this metal oxide to that stoichiometric ratio. For example zinc oxide is ZnO.

### Example 1

Figure 1 represents a first general embodiment of the invention. In a first reduction step NH₃ is provided to the reactor thereby reducing the redox catalyst. In this first step NH₃ is converted into H₂ and N₂ and subsequently H₂ is converted into H₂O by the redox catalyst MₓO_{y}, thereby forming the reduced redox catalyst M and H₂O. Optionally the reduced redox catalyst is still a metal oxide. The conversion of NH₃ into H₂ and N₂ may be catalysed by the redox catalyst or by a separate catalyst for converting NH₃ into N₂ and H₂ that is present in the reactor. The product stream of this first step comprises N₂ and H₂O which can be easily separated by condensing the H₂O. A concentrated N₂ product is obtained. In addition the heat of this product stream may be utilized, for example for directly heating the feed or for generating electricity in a generator. The electricity may be used to heat the feed or the reactor.

In a second oxidation step the reduced redox catalyst M is oxidized by CO₂ to form CO and the oxidized redox catalyst MₓO_{y}. This second product stream comprises a high concentration of CO or even only consists of CO which prevents the need for further separation of this stream. The CO can readily be used for further processing, without the need of further separation or concentration steps. The concentration of CO in the second product directly relates to the CO₂ concentration in the feed.

Figure 2 represents a second specific embodiment of the invention. For this embodiment a H₂ permeable membrane is present (dotted line) that separates the reactor in two parts. In a first part of the reactor a catalyst for converting NH₃ into N₂ and H₂ is present, in a second part separated from the first part by the H₂ permeable membrane a redox catalyst for converting CO₂ to CO is present.

In a first reduction step NH₃ is provided to the first part of the reactor thereby reducing the redox catalyst, in addition a sweep gas A is provided to the second part of the reactor. In this first step NH₃ is converted into H₂ and N₂ in the first part of the reactor. The H₂ that is formed permeates the membrane to the second part of the reactor. H₂ is subsequently converted into H₂O in this second part of the reactor by the redox catalyst MₓO_{y}, thereby forming the reduced redox catalyst M and H₂O. Optionally the reduced redox catalyst is still a metal oxide. The sweeping gas carries the formed H₂O away. The heat comprised in the H₂O stream that exits the reactor may be utilized, for example for directly heating the feed or for generating electricity in a generator. The electricity may be used to heat the feed or the reactor. Also a concentrated N₂ product is obtained from the first part of the reactor. For this embodiment there is no need for removing H₂O from this N₂ stream.

In a second oxidation step CO₂ is provided to the second part of the reactor and the reduced redox catalyst M is oxidized by CO₂ to form CO and the oxidized redox catalyst MₓO_{y}. The second product stream comprises a high concentration of CO or even only consists of CO which prevents the need for further separation of this stream. The CO can readily be used for further processing, without the need of further separation or concentration steps. The concentration of CO in the second product directly relates to the CO₂ concentration in the feed.

## Claims

1. Use of NH₃ in a chemical looping process for the production of CO from CO₂ by reduction of CO₂ to CO by a redox catalyst, wherein NH₃ is the reducing agent that reduces the redox catalyst.

2. Process for the production of CO from CO₂, wherein NH₃ and CO₂ are iteratively provided to a reactor comprising one or more catalysts and wherein CO is formed in the reactor when CO₂ is provided, and wherein the reaction temperature is 400°C or higher.

3. Process according to claim 2 wherein the one or more catalysts comprise a redox catalyst for converting CO₂ to CO and a catalyst for converting NH₃ to N₂ and H₂.

4. Process according to claim 3 wherein the redox catalyst for converting CO₂ to CO is a metal oxide wherein preferably the metal is a transition metal, more preferably the metal is selected from the list consisting of Cu, Fe, Mo and W.

5. Process according to claim 3 or 4 wherein the catalyst for converting NH₃ to N₂ and H₂ is a metal catalyst or its oxide, preferably a transition metal catalyst or its oxide, more preferably a metal catalyst or its oxide wherein the metal is selected from the list consisting of Ce, Zr, Ru, Ni, Rh, Co, Ir, Fe, Pt, Cr, Pd, Cu, Ag, Mo, Gd and combinations thereof, even more preferably the metal is selected from the list consisting of Ce, Ni, Ru and Fe.

6. Process according to any one of claims 3-5 wherein the catalyst for converting CO₂ to CO is the same catalyst as the catalyst for converting NH₃ to N₂ and H₂, preferably this catalyst is an iron oxide.

7. Process according to any one of claims 3-6 wherein one or more of the one or more catalysts is applied on a support, preferably wherein the support is particulate.

8. The process according to claim 7 wherein the support material is a metal oxide or a carbon based support, more preferably the support is selected from the list consisting of Al₂O₃, SiO₂, CeO₂, MgO, La₂O₃, TiO₂, Y₂O₃, ZrO₂, CeZrO₂, SBA-15, ZSM-5, carbon nanotubes, C and Graphite.

9. The process according to any one of claims 3-9 wherein the reactor is a membrane reactor comprising a membrane that is permeable for H₂, wherein the H₂ permeable membrane separates the reactor into two parts and wherein to the first part NH₃ is provided and in this part a catalyst for converting NH₃ to N₂ and H₂ is present and wherein to second part CO₂ is provided and in this part a redox catalyst for converting CO₂ to CO is present.

10. Process according to claim 9 wherein the H₂ permeable membrane is selected from the list of a metallic membrane, a ceramic membrane and a carbon membrane, preferably the H₂ permeable membrane is a ceramic membrane or a carbon membrane, more preferably a dense or porous ceramic membrane or a porous carbon membrane, even more preferably a dense ceramic membrane or a porous carbon membrane.

11. Process according to any one of claims 3-10 wherein the reactor is electrically heated, preferably wherein part of the electricity for the heating is generated by a steam turbine that is at least partially powered by steam that is produced in the reactor.

12. Process according to any one of claims 3-11 wherein the reaction temperature is in the range of 400 °C - 1200 °C, preferably in the range of 600 °C - 1000 °C, more preferably in the range of 650 °C - 850 °C, even more preferably in the range of 750 °C - 850 °C.

13. Process according to any one of claims 3-12 wherein the reaction pressure is in the range of 1-100 bar, preferably 2-50 bar, even more preferably 4-20 bar, most preferably 5-10 bar.

14. A chemical looping reactor for the production of CO from CO₂ comprising a membrane that is permeable for H₂ that separates the reactor into two parts, wherein the first part comprises a catalyst for converting NH₃ to N₂ and H₂ and the second part comprises a redox catalyst for converting CO₂ to CO and wherein the reactor comprises one or more feed inlets and one or more product outlets connected to the first part and one or more feed inlets and one or more product outlets connected to the second part.
